# EUROPÄISCHE PATENTSCHRIFT

(11) **EP 2 205 655 B1**
(45) Veröffentlichungstag und Bekanntmachung des Hinweises auf die Patenterteilung: **26.06.2013**
(21) Anmeldenummer: 08842242.3
(22) Anmeldetag: 17.10.2008
(51) Int. Cl.: C08G 18/10, C08G 18/32, C08G 18/48, C08G 18/62, C08G 18/75, C09D 175/08

(54) **URETHANGRUPPENHALTIGE POLYISOCYANATE**
POLYISOCYANATE CONTAINING URETHANE GROUPS
POLYISOCYANATES CONTENANT DES GROUPES URÉTHANE

(30) Priorität: 22.10.2007 EP 07118953
(43) Veröffentlichungstag der Anmeldung: 14.07.2010
(73) Patentinhaber: BASF SE, 67056 Ludwigshafen (DE)
(72) Erfinder: JOKISCH, Carl, 68259 Mannheim (DE); MARTIN-PORTUGUES, Marta, 67071 Ludwigshafen (DE)
(86) Internationale Anmeldenummer: PCT/EP2008/064013
(87) Internationale Veröffentlichungsnummer: WO 2009/053307

(56) Entgegenhaltungen:
- DE-A1- 2 305 695
- DE-A1- 4 311 923
- GB-A- 1 301 484
- GB-A- 1 351 773
- US-A- 3 803 098
- US-A- 4 065 587
- US-A- 4 439 553
- US-A- 4 732 957
- US-A- 5 453 449

## Beschreibung

Die vorliegende Erfindung betrifft neue urethangruppenhaltige Polyisocyanate auf Basis von Isophorondiisocyanat und deren Verwendung.

DE 10241295 A1 beschreibt Umsetzungsprodukte von Diolen, beispielsweise Polyalkylenglykolen mit einer Molmasse unter 1000 g/mol mit Isophorondiisocyanat und deren Verwendung in Gießharzmassen sowie in Überzügen für Edelholzfumiere. Andere Verwendungen werden nicht offenbart.

DE 4429076 A1 beschreibt Urethanpräpolymere aus Diisocyanaten und einem Gemisch aus Polyetherpolyol mit einem Molekulargewicht von 1000 bis 3000 und Polyestercarbonatdiolen mit einem Molekulargewicht von 700 bis 3000 und deren Verwendung in Beschichtungsmassen.

EP 620237 A2 beschreibt Präpolymere aus Diisocyanaten und unter anderen Polyetherpolyolen mit einem Molgewicht von 500 bis 66000 und einer Funktionalität von 2 bis 3. Als Polyetherpolyole werden Umsetzungsprodukte von Ethylenoxid, Propylenoxid oder Tetrahydrofuran mit Wasser, Ethylenglykol, Propylenglykol, Butandiol oder Trimethylolpropan genannt. Explizit offenbart wird in Beispiel 5 ein Präpolymer von Isophorondiisocyanat mit einem auf Trimethylolpropan gestarteten, Ethylenoxid und Propylenoxid enthaltenden Polyetherpolyol der Molmasse 3500 g/mol.

Das entstehende Präpolymer hat einen geringen NCO-Gehalt von lediglich 2,8% und eine hohe Viskosität von 13.000 mPas bei 25 °C. Nachteilig ist, daß durch das hochmolekulare Polyetherpolyol ein flexibler Baustein in das Präpolymer eingeführt wird, so daß der resultierende Lack relativ weich ist

DE 10259248 A1 beschreibt Präpolymere von asymmetrischen Isocyanaten und Polyolen sowie deren Verwendung als Klebstoffe.

DE-OS 2522189 beschreibt Präpolymere aus Isophorondiisocyanat und unalkoxyliertem Trimethylolpropan sowie deren Verwendung in Anstrichmitteln.

DE-OS 2305695 beschreibt Präpolymere aus Isocyanaten, bevorzugt Isophorondiisocyanat, und niedrigmolekularen Polyolen mit 2 bis 4 Hydroxygruppen, was auch Anlagerungsprodukte mit Ethylenoxid oder Propylenoxid umfaßt und solche enthaltende Lacke.

US 4732957 offenbart als Polyisocyanatkomponenten I und II Polyisocyanate auf Basis eines propoxylierten Trimethylolpropan. Aus der Molmasse kann man errechnen, daß Polyisocyanat I statistisch 2,9 Propylenoxideinheiten und Polyisocyanat II statistisch 2,7 Propylenoxideinheiten trägt.

Gemäß Spalte 3, Zeile 67 f. ist ein Gemisch aus Ethylenoxid und Propylenoxid bevorzugt, jedoch wird keine Anzahl der Alkylenoxidgruppen offenbart.

Aufgabe der vorliegenden Erfindung war es, neue Polyisocyanate für Lacke, besonders für Klarlacke bereitzustellen, die eine hohe Kratzfestigkeit bei gleichzeitig guter Elastizität aufweisen. Zudem sollten die Produkte eine geringe Viskosität aufweisen, damit sie leichter in Lacke einarbeitbar sind.

Die Aufgabe wurde gelöst durch urethangruppenhaltige Polyisocyanate der Formel (I)

R^{a}-(-Y-[-Xᵢ]ₙ-(CO)-N-R^{b}-NCO)ₖ

worin
- R^{a}: einen k-wertigen Rest, bevorzugt einen organischen Rest,
- k: eine positive ganze Zahl von 3 bis 6,
- Y: für ein Sauerstoff- oder Stickstoffatom,
- Xᵢ: -CH₂-CH₂-O-,
- n: für jedes k unabhängig voneinander 0 oder eine positive ganze Zahl bedeutet,
mit der Maßgabe, daß in der Verbindung der Formel (I) mindestens drei und nicht mehr als sechzehn Gruppen Xᵢ enthalten sind, und
- R^{b}: für jedes k unabhängig voneinander einen Rest 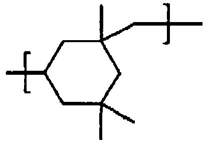 oder 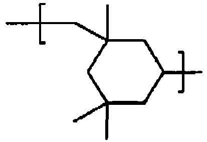
bedeutet, und worin
entweder der zugrundeliegende Alkohol R^{a}-(-Y-H)ₖ, worin Y ein Sauerstoffatom darstellt, ausgewählt ist aus der Gruppe bestehend aus Trimethylolbutan, Trimethytolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit und Dulcit (Galactit),
oder der zugrundeliegende Alkohol R^{a}-(-Y-[-Xᵢ]ₙ-H)ₖ, worin Y ein Stickstoffatom darstellt, 1,3,5,Tris-(2-hydroxyethyl)cyanursäure ist.

Bei den den erfindungsgemäßen Urethanen zugrundeliegenden Alkoholen R^{a}-(-Y-H)ₖ, in denen Y ein Sauerstoffatom darstellt, handelt es sich um Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit). Xylit oder Dulcit (Galactit).

Bevorzugt sind Trimethylolpropan, Pentaerythrit, Glycerin und Diglycerol, bevorzugt Trimethylolpropan und Diglycerol und besonders bevorzugt Trimethylolpropan.

Die Anzahl der Gruppen Xᵢ in der Verbindung der Formel (I) beträgt erfindungsgemäß drei bis sechzehn, besonders bevorzugt drei bis zehn, ganz besonders bevorzugt drei bis acht und insbesondere drei bis sechs.

Zur Erfüllung dieser Maßgabe kann die Zahl n für jedes k unabhängig voneinander 0 oder eine positive ganze Zahl bedeuten, beispielsweise 0 bis 10, bevorzugt 1 bis 5, besonders bevorzugt 1 bis 4, ganz besonders bevorzugt 1 bis 3 und insbesondere 1 oder 2.

Bei den den erfindungsgemäßen Urethanen zugrundeliegenden Alkoholen R^{a}-(-Y-[-Xᵢ]ₙ-H)ₖ, in denen Y ein Stickstoffatom darstellt, handelt es sich um 1,3,5,Tris-(2-hydroxyethyl)cyanursäure.

Der Rest R^{b} ist abgeleitet von monomerem Isophorondlisocyanat, wobei es erfindungsgemäß eine untergeordnete Rolle spielt, ob die Urethangruppe an ein primäres oder sekundäres Kohlenstoffatom gebunden ist. Je nach Reaktionsbedingungen wird ein größerer Teil der Urethangruppen an ein sekundäres Kohlenstoffatom gebunden sein. Gemäß E. Spyrou. Farbe und Lack 106, 10/2006. S. 126-130, kann man beispielsweise die Selektivität der Urethanreaktion durch unterschiedliche Katalysatoren beeinflussen.

Das zahlenmittlere Molekulargewicht Mₙ der urethangruppenhaltigen Polyisocyanate der Formel (I) beträgt in der Regel unter 1800, bevorzugt unter 1400, besonders bevorzugt unter 1300, ganz besonders bevorzugt unter 1200 und insbesondere unter 1100 g/mol.

Der NCO-Gehalt (berechnet als NCO mit eine Molgewicht von 42 g/mol) beträgt in der Regel mehr als 5 Gew% und bevorzugt mehr als 6 Gew% und bis zu 15 Gew%, bevorzugt bis zu 14 Gew%.

Neben Urethangruppen können die erfindungsgemäßen urethangruppenhaltigen Polyisocyanate in untergeordneten Mengen noch weitere reaktive Gruppen tragen, beispielsweise unumgesetzte Hydroxygruppen, Allophanatgruppen sowie Isocyanuratgruppen.

Zur Herstellung der urethangruppenhaltigen Polyisocyanate werden Isophorondiisocyanat und der entsprechende alkoxylierte Alkohol mit oder ohne Lösungsmittel unter Urethanisierungsbedingungen miteinander umgesetzt.

Die Temperatur beträgt bei dieser Umsetzung in der Regel bis zu 150 °C, bevorzugt bis zu 120 °C, besonders bevorzugt unter 100 °C und ganz besonders bevorzugt unter 90 °C und wird zumeist in Gegenwart mindestens eines Katalysators durchgeführt, der die Urethanisierungsreaktion katalysiert. Die Reaktion kann aber auch in Abwesenheit eines Katalysators durchgeführt werden.

In der Regel sollte die Temperatur der Reaktion mindestens 20 °C betragen, bevorzugt mindestens 30, besonders bevorzugt mindestens 40 und ganz besonders bevorzugt mindestens 50 °C.

Katalysatoren sind hierbei solche Verbindungen, die durch ihre Anwesenheit in einem Eduktgemisch zu einem höheren Anteil an urethangruppenhaltigen Reaktionsprodukten führen als das gleiche Eduktgemisch in deren Abwesenheit unter denselben Reaktionsbedingungen.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat. Auch Metallkomplexe wie Acetylacetonate des Eisens, Titans, Aluminiums, Zirkons, Mangans, Nickels, Zinks und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-dioctoat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F-, Cl⁻, ClO⁻, ClO₃⁻, ClO₄⁻, Br⁻, J-, JO₃⁻, CN-, OCN-, NO₂⁻, NO₃⁻, HCO₃⁻, CO₃²⁻, S²⁻, SH-, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂-, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Ferner sind als Katalysatoren einsetzbar:
- Organische Metallsalze der Formel (A)ₙ-R-O-CO-O^{⊖}M^{⊕} gemäß US-A-3 817 939, in der bedeuten:
   A eine Hydroxylgruppe oder ein Wasserstoffatom,
   n eine Zahl von 1 bis 3,
   R einen polyfunktionellen linearen oder verzweigten, aliphatischen oder aromatischen Kohlenwasserstoffrest und
   M^{⊕} in Kation, z.B. ein Alkalimetallkation oder ein quartemäres Ammoniumkation, wie Tetraalkylammonium, sowie
- quartäre Hydroxyalkylammoniumverbindungen der Formel

   R²⁴,R²⁵,R²⁶N^{⊕}-CH₂-CH(OH)-R^{27 ⊖}O-(CO)-R²⁸
als Katalysator gemäß DE-A-26 31 733 (US-A-4 040 992) mit den dort angegeben Definitionen für die Reste.

Besonders geeignet als Katalysatoren für das Verfahren sind quartäre Ammoniumsalze entsprechend der Formel 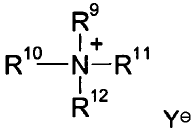 mit
Y^{⊖}= Carboxylat (R¹³COO⁻), Fluorid (F-), Carbonat (R¹³O(CO)O⁻) oder Hydroxid (OH⁻),
wie sie für Y⁻ = OH- im US-Patent 4,324,879 und in den Deutschen Offenlegungsschriften 2,806,731 und 2,901,479 beschrieben sind.

Bevorzugt handelt es sich bei dem Rest Y^{⊖} um ein Carboxylat, Carbonat oder Hydroxid und besonders bevorzugt um ein Carboxylat oder Hydroxid.

R¹³ ist darin Wasserstoff, C₁ bis C₂₀-Alkyl, C₆ bis C₁₂-Aryl oder C₇ bis C₂₀-Arylalkyl, das jeweils optional substituiert sein kann.

Bevorzugt ist R¹³ Wasserstoff oder C₁ bis C₈-Alkyl.

Bevorzugte quartäre Ammoniumsalze sind diejenigen, bei denen die Reste R⁹ bis R¹² gleiche oder unterschiedliche Alkylgruppen mit 1 bis 20, vorzugsweise 1 bis 4, Kohlenstoffatomen darstellen, die gegebenenfalls durch Hydroxyl- oder Phenylgruppen substituiert sind.

Zwei der Reste R⁹ bis R¹² können auch zusammen mit dem Stickstoffatom und gegebenenfalls einem weiteren Stickstoff- oder Sauerstoffatom einen heterocyclischen, fünf-, sechs- oder siebengliedrigen Ring bilden. Die Reste R⁹ bis R¹¹ können in jedem Falle auch Ethylenreste darstellen, die zusammen mit dem quartären Stickstoffatom und einem weiteren tertiären Stickstoffatom eine bicyclische Triethylendiaminstruktur bilden, vorausgesetzt, daß der Rest R¹² dann eine Hydroxyalkylgruppe mit 2 bis 4 Kohlenstoffatomen darstellt, bei der die Hydroxylgruppe vorzugsweise in der 2-Stellung zu dem quartären Stickstoffatom angeordnet ist. Der hydroxysubstituierte Rest oder die hydroxysubstituierten Reste können auch andere Substituenten enthalten, beispielsweise C₁- bis C₄-Alkyloxy-Substituenten.

Dabei können die Ammoniumionen auch Teil eines ein- oder mehrgliedrigen Ringsystems sein, beispielsweise abgeleitet von Piperazin, Morpholin, Piperidin, Pyrrolidin, Chinuclidin oder Di-aza-bicyclo-[2.2.2]-octan.

Beispiele für 1 bis 20 Kohlenstoffatome aufweisende Gruppen R⁹ bis R¹² sind unabhängig voneinander Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Nonyl, iso-Nonyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2-Hydroxyethyl, 2-Hydroxypropyl, 3-Hydroxypropyl, 4-Hydroxybutyl, 6-Hydroxyhexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Methylnaphthyl, Isopropylnaphthyl, Chlomaphthyl, 2,6-Dimethylphenyl, 2,4,6-Trimethylphenyl, 2,6-Dimethoxyphenyl, 2,6-Dichlorphenyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Chlorcyclohexyl, Dichlorcyclohexyl, Dichlorcyclopentyl, Norbomyl oder Norbornenyl.

Bevorzugte sind unabhängig voneinander die Reste R⁹ bis R¹² C₁ bis C₄-Alkyl. R¹² kann zusätzlich Benzyl sein oder ein Rest der Fomel 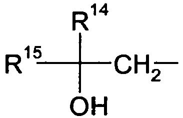 worin R¹⁴ und R¹⁵ unabhängig voneinander Wasserstoff oder C₁ bis C₄-Alkyl sein kann.

Besonders bevorzugte Reste R⁹ bis R¹² sind unabhängig voneinander Methyl, Ethyl und n-Butyl und für R¹² zusätzlich Benzyl, 2-Hydroxyethyl und 2-Hydroxypropyl.

Bevorzugt können für das erfindungsgemäße Verfahren folgende Katalysatoren eingesetzt werden:

Quarternäre Ammoniumhydroxide, vorzugsweise N,N,N-Trimethyl-N-benzylammoniumhydroxid und N,N,N-Trimethyl-N-(2-hydroxypropyl)-ammoniumhydroxid, gemäß DE-A-38 06 276.

Hydroxyalkyl substituierte quarternäre Ammoniumhydroxide gemäß EP-A-10 589 (US-A-4 324 879).

Organische Metallsalze der Formel (A)ₙ-R-O-CO-O^{⊖}M^{⊕} gemäß US-A-3 817 939, in der bedeuten, A eine Hydroxylgruppe oder ein Wasserstoffatom, n eine Zahl von 1 bis 3, R einen polyfunktionellen linearen oder verzweigten, aliphatischen oder aromatischen Kohlenwasserstoffrest und M ein Kation einer starken Base, z.B. ein Alkalimetallkation oder ein quarternäres Ammoniumkation, wie Tetraalkylammonium.

Bevorzugte Katalysatoren sind Zink-(II)-Salze, unter diesen besonders Zink Acetylacetonat.

Weiterhin bevorzugt ist Dibutylzinndilaurat.

Der Katalysator wird je nach Aktivität normalerweise in Mengen von 0,001 bis 10 mol% bzgl. eingesetzter Isocyanatgruppen eingesetzt, bevorzugt 0,5 bis 8, besonders bevorzugt 1 bis 7 und ganz besonders bevorzugt 2 bis 5 mol%.

Isophorondiisocyanat wird zumeist in mindestens äquimolarer Stöchiometrie bezogen auf die Hydroxygruppen im alkoxylierten Alkohol eingesetzt, bevorzugt in einem 1,1 bis 10-fachem Überschuß von Isophorondiisocyanat zu Hydroxygruppen im alkoxylierten Alkohol, bevorzugt im 1,2 bis 8- und besonders bevorzugt im 1,5 bis 5-fachen Überschuß.

Der unumgesetzte Teil Isophorondiisocyanat kann entweder im Reaktionsgemisch verbleiben oder wird bevorzugt abgetrennt, bevorzugt über eine Destillation, beispielsweise Kurzweg- oder Dünnschichtdestillation.

Der Gehalt an nicht umgesetztem Isophorondiisocyanat im Reaktionsgemisch beträgt in der Regel unter 1 Gew%, bevorzugt unter 0,5 Gew% und besonders bevorzugt unter 0,3 Gew%.

Die Reaktion wird bevorzugt ohne Lösungsmittel durchgeführt, kann aber auch in Gegenwart mindestens eines Lösungsmittel durchgeführt werden. Ebenso kann das erhaltene Reaktionsgemisch nach Beendigung der Reaktion in einem Lösungsmittel formuliert werden.

Als Lösungsmittel einsetzbar sind solche, die keine gegenüber Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, chlorierte Kohlenwasserstoffe, Ketone, Ester, alkoxylierte Alkansäurealkylester, Ether, respektive Gemische der Lösungsmittel.

Als aromatisch Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 -198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 -180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen. Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert-Butylmethylketon.

Die erfindungsgemäßen urethangruppenhaltigen Polyisocyanate finden beispielsweise Anwendung in zweikomponentigen Polyurethanlacken mit mindestens einer Komponente, die gegenüber Isocyanat reaktive Gruppen enthalten (Bindemittel). Dazu können sie allein oder im Gemisch mit anderen Polyisocyanaten als Vernetzerkomponente eingesetzt werden.

Derartige andere Polyisocyanate sind durch Oligomerisierung von monomeren Isocyanaten erhältlich.

Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'-oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate, zu denen die monomeren Isocyanate oligomerisiert werden können, sind in der Regel wie folgt charakterisiert:

Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethyiendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den andereren Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen . Diese Urethan- und/oder Allophanatgruppen aufweisenden Polyisocyanate haben im allgemeinen einen NCO-Gehalt von 12 bis 24 Gew.-% und eine mittlere NCO-Funktionalität von 2,5 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethyiendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im allgemeinen einen NCO-Gehalt von 18 bis 22 Gew.-% und eine mittlere NCO-Funktionalität von 2,8 bis 6 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-12 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Moleküle handelt es sich beispielsweise um Hydroxyallkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat.

In einer besonders bevorzugten Ausführungsform handelt es sich bei dem Polyisocyanat um Isocyanuratgruppen enthaltende Polyisocyanate von 1,6-Hexamethylendiisocyanat.

In einer weiteren besonders bevorzugten Ausführungsform handelt es sich bei dem Polyisocyanat um ein Gemisch von Isocyanuratgruppen enthaltenden Polyisocyanaten von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Die erfindungsgemäßen urethangruppenhaltigen Polyisocyanate können gegebenenfalls im Gemisch mit anderen Polyisocyanat als Vernetzerkomponenten mit mindestens einem Bindemittel in Polyurethanlacken eingesetzt werden.

In der Regel werden für Polyisocyanatzusammensetzungen, also die Summe der isocyanatgruppenhaltigen Verbindungen,
50 bis 100 Gew% der erfindungsgemäßen urethangruppenhaltigen Polyisocyanate eingesetzt, bevorzugt 50 bis 90 Gew% und besonders bevorzugt 60 bis 80 Gew%, und 0 bis 50 Gew% andere Polyisocyanate, bevorzugt 10 bis 50, besonders bevorzugt 20 bis 40 Gew%,
mit der Maßgabe, daß die Summe immer 100 Gew% beträgt.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Copolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyetherpolyole.

Bevorzugte OH-Zahlen, gemessen gemäß DIN 53240-2, sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Bindemittel eine Säurezahl gemäß DIN EN ISO 3682 bis 200 mg KOH/g, bevorzugt bis 150 und besonders bevorzugt bis 100 mg KOH/g aufweisen.

Polyacrylatpolyole weisen bevorzugt ein Molekulargewicht Mₙ von mindestens 1000, besonders bevorzugt mindestens 2000 und ganz besonders bevorzugt mindestens 5000 g/mol auf. Das Molekulargewicht Mₙ kann prinzipiell nach oben unbegrenzt sein, bevorzugt bis 200.000, besonders bevorzugt bis zu 100.000, ganz besonders bevorzugt bis zu 80.000 und insbesondere bis zu 50.000 g/mol betragen.

Letztere können beispielsweise Monoester von α,β-ungesättigten Carbonsäuren, wie Acrylsäure, Methacrylsäure (in dieser Schrift kurz als "(Meth)acrylsäure" bezeichnet), mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxygruppentragenden Monomere werden in die Copolymerisation im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew% aus C₁-C₁₀-Alkyl(meth)acrylaten, Styrol und dessen Derivate, Vinylimidazol oder deren Mischungen bestehen.

Darüber können die Polymere hydroxyfunktionelle Monomere entsprechend dem obigen Hydroxygruppengehalt und gegebenenfalls weitere Monomere enthalten, z.B. (Meth)acrylsäureglycidylepoxyester, ethylenisch ungesättigte Säuren, insbesondere Carbonsäuren, Säureanhydride oder Säureamide.

Weitere Polymere sind z.B. Polyesterole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl-oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3-oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole in Betracht, wie sie z.B. durch Umsetzung von Phosgen mit einem Überschuß von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Weiterhin sind als Polymere auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Weiterhin können hydroxyfunktionelle Carbonsäuren eingesetzt werden, wie beispielsweise Dimethylolpropionsäure oder Dimethylolbutansäure.

Bei den Polymeren kann es sich natürlich auch um Verbindungen mit primären der sekundären Aminogruppen handeln.

Dazu werden Polyisocyanatzusammensetzung und Bindemittel in einem Molverhältnis von Isocyanatgruppen zu gegenüber Isocyanat reaktiven Gruppen von 0,1:1 bis 10:1, bevorzugt 0,2:1 bis 5:1, besonders bevorzugt 0,3:1 bis 3:1, ganz besonders bevorzugt 0,5:1 bis 2:1, insbesondere 0,8:1 bis 1,2:1 und speziell 0,9:1 bis 1,1:1 miteinander vermischt, wobei gegebenenfalls noch weitere lacktypische Bestandteile eingemischt werden können, und auf das Substrat aufgetragen.

Anschließend wird das Lackgemisch unter geeigneten Bedingungen ausgehärtet. Je nach Anwendung kann dies beispielsweise bei 100 bis 140 °C erfolgen, beispielsweise bei Lacken in OEM-Anwendungen, oder in einem niedrigeren Temperaturintervall von beispielsweise 20 bis 80 °C.

Dies erfordert je nach Temperatur in der Regel nicht mehr 12 Stunden, bevorzugt bis zu 8 Stunden, besonders bevorzugt bis zu 6, ganz besonders bevorzugt bis zu 4 und insbesondere bis zu 3 Stunden.

Ferner können Beschichtungsmassen 0 bis 10 Gew% mindestens eines UV Stabilisators enthalten.

Geeignete Stabilisatoren umfassen typische UV-Absorber wie Oxanilide, Triazine und Benzotriazol (letztere erhältlich als Tinuvin® -Marken der Ciba-Spezialitätenchemie) und Benzophenone.

Diese können zusätzlich 0 bis 5 Gew% geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat enthalten.

Ferner können Beschichtungsmassen weiterhin 0 bis 10 Gew% weiterer lacktypischer Additive enthalten.

Als weitere lacktypische Additive können beispielsweise Antioxidantien, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Beschichtungsmasse, gegebenenfalls unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einem Lack, der die erfindungsgemä-βen urethangruppenhaltigen Polyisocyanate enthält, Gegenstand der vorliegenden Erfindung.

Besonders geeignet sind solche Polyurethanlacke für Anwendungen, In denen eine besonders hohe Applikationssicherheit, Außenwitterungsbeständigkeit, Optik, Lösemittel-, Chemikalien- und Wasserfestigkelt gefordert werden.

Die erhaltenen zweikomponentigen Beschichtungsmassen und Lackformulierungen eignen sich prinzipiell zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können. Besonders bevorzugt sind sie jedoch zum Beschichten von Kunststoffoberflächen und metallischen Substraten geeignet.

Bevorzugt werden diese Beschichtungsmassen als Klar-, Basis- und Decklacke(n), Primen und Füller eingesetzt, besonders eignen sie sich durch ihre hohe Kratzfestigkeit als Decklack, bevorzugt als Klarlack, insbesondere in Beschichtungen auf Fahrzeugen und Flugzeugen und In Automobillacken als OEM und refinish-Anwendung.

Es ist ein Vorteil der erfindungsgemäßen urethangruppenhaltigen Polyisocyanate, daß sie in Klarlacken eine hohe Kratzfestigkeit gleichzeitig guter Elastizität ergeben. Zudern ergeben die erfindungsgemäßen Produkte meist eine geringere Viskosität.

Zudem sind der eingesetzte Alkohol und Isophorondiisocyanat besser miteinander mischbar als andere Alkohole, wie z.B. Glycerin.

### Beispiele

### Vergleichsbeispiel 1

1000 g Isophorondiisocyanat wurden mit 40,2 g Trimethylolpropan gemischt und unter Rühren auf 80°C erwärmt. Die klare Lösung wurde mit 0,5 g Dibutylzinnlaurat (DBTL) versetzt und 1 h gerührt. Die Mischung wurde bei 185°C Außentemperatur und 4,9 mbar über einen Dünnschichtverdampfer destilliert.

Das feste Produkt hatte einen NCO Gehalt von 12,3%. Die 70%ige Lösung in Butylacetat hatte einen NCO Gehalt von 8,7% und eine Viskosität von 15000 mPas.

### Vergleichsbeispiel 2

500 g Isophorondiisocyanat werden mit 27,6 g Glycerin versetzt und auf 80 °C erwärmt. Die Mischung ist flockig und inhomogen. Nach 2,5 h werden 0,5 g DBTL zugegeben und weitere 4 h gerührt.
Die Mischung bleibt inhomogen und wurde verworfen.

### Beispiel 1

900 g (4,05 mol) Isophorondiisocyanat wurden mit 39,2 g (0,15 mol) 1,3,5,Tris-(2-hydroxyethyl)cyanursäure vermischt und auf 60°C erwärmt. Die Lösung wurde mit 0,2 g DBTL versetzt und 5 h gerührt. Das Gemisch wurde bei 160°C Außentemperatur und 1,9 mbar über einen Dunnschichtverdampfer destilliert.
Das Produkt hatte einen Schmelzpunkt von 170-175 °C und einen NCO Gehalt von 13,9 %. Die 70%ige Lösung in Butylacetat hatte eine Viskosität von 2230 mPas

### nicht-anspruchsgemäßes Beispiel 2

1000 g Isophorondiisocyanat (4,5 mol) wurden mit 92,4 g (0,3 mol) propoxyliertem Trimethylolpropan mit einem mittleren Molekulargewicht von 308 g/mol (entspricht etwa eine Propylenoxideinheit je Hydroxygruppe) vermischt. Die Mischung wurde auf 80°C erwärmt und mit 0,2 g DBTL versetzt und weitere 10 Minuten gerührt. Die Mischung wurde bei 205°C Außentemperatur und 5,3 mbar über einen Dünnschichtverdampfer destilliert.
Die 70%ige Lösung des Produktes hatte einen NCO Gehalt von 7,5% und eine Viskosität von 7000 mPas.

### Beispiel 3

900 g (4,05 mol) Isophorondiisocyanat wurden mit 135 g (0,3 mol) ethoxyliertem Trimethylolpropan mit einem mittleren Molekulargewicht von 450 g/mol (entspricht statistisch etwa 2,5 Ethylenoxideinheiten je Hydroxygruppe) versetzt und auf 81 °C erwärmt. Nach einer Stunde war ein NCO Gehalt von 27,6% erreicht und die klare Lösung über einen Dünnschichtverdampfer bei 205 °C Außentemperatur und 5,3 mbar destilliert.
Das Produkt hatte als 70%ige Lösung in Butylacetat eine Viskosität von 540 mPas und einen NCO-Gehalt von 6,6 %.

### Beispiel 4

900 g (4,05 mol) Isophorondiisocyanat wurden mit 219 g (0,3 mol) ethoxyliertem Trimethylolpropan mit einem mittleren Molekulargewicht von 730 g/mol (entspricht statistisch etwa 4,6 Ethylenoxideinheiten je Hydroxygruppe) versetzt und auf 82 °C erwärmt. Nach einer Stunde war ein NCO Gehalt von 26,9 % erreicht und die klare Lösung wurde über einen Dünnschichtverdampfer bei 205°C Außentemperatur und 5,3 mbar destilliert.

Die 70%ige Lösung des Produktes in Butylacetat hatte eine Viskosität von 220 mPas und einen NCO Gehalt von 5,6%.

### nicht-anspruchsgemäßes Beispiel 5

500 g (2,2,5 mol) Isophorondiisocyanat wurden mit 79,8 g (0,3 mol) propoxyliertem Glycerin mit statistisch etwa einer Propylenoxideinheiten je Hydroxygruppe versetzt und auf 80°C erwärmt. Die anfänglich inhomogene Mischung klart auf und wird mit 0,3 g DBTL versetzt. Nach 10 Minuten ist ein NCO Gehalt von 25,8% erreicht und das Produkt wird bei 185°C Außentemperatur und 3,6 mbar über einen Dünnschichtverdampfer destilliert.
Die 70%ige Lösung des Produktes in Butylacetat hatte eine Viskosität von 970 mPas und einen NCO Gehalt von 8,3 %.

### nicht-anspruchsgemäßes Beispiel 6

500 g (2,25 mol) Isophorondiisocyanat wurden mit 188,7 g (0,3 mol) propoxyliertem Pentaerythrit (im Schnitt 17 Propylenoxideinheit auf 8 Hydroxygruppen, also in Summe 8,5 Einheiten pro Pentaerythrit) versetzt und auf 80°C erwärmt. Die anfänglich inhomogene Mischung klart auf und wird mit 0,3 g DBTL versetzt. Nach 15 Minuten war ein NCO von 18,2 % erreicht und die Mischung wurde bei 185°C und 3,8 mbar über einen Dünnschichtverdampfer destilliert.
Die 70%ige Lösung des Produktes hatte eine Viskosität von 790 mPas und einen NCO Gehalt von 6,6 %.

### Anwendungsbeispiele:

Die erfindungsgemäßen sowie Vergleichspolyisocyanate, wurden mit einem hydroxyfunktionellen Polyacrylatpolyol (Macrynal® SM 600, Fa. Cytec; Festgehalt = 60%; OH-Zahl = 100 mg KOH/g) entsprechend einen stöchiometrischen NCO/OH-Verhältnis von 1:1 gemischt und mit Butylacetat auf einer Applikationsviskosität von 20 s (DIN 53 211 Becher 4 mm Auslaufsdüse) eingestellt. Mit einem Ziehrahmen wurden Beschichtungen mit einer Nassfilmdicke von 200 µm auf Metallbleche aufgetragen. Die so enthaltenen Klarlacke wurden nach 10 Minuten Ablüftungszeit bei 130°C 30 Minuten gehärtet, und die Pendelhärte (DIN 53157, hohe Werte bedeuten hohe Härte), die Erichsentiefe (DIN 53156, hohe Werte bedeuten hohe Flexibilität) und der nicht flüchtige Anteil (NfA) der Formulierung gemessen. Die Untersuchungen der Lackeigenschaften erfolgten nach 24 Stunden Lagerung der lackierten Bleche in einem Klimaraum bei 23 °C und 50 % relativer Luftfeuchte.

Es zeigte sich , dass die erfindungsgemäßen Produkte niedrigere Viskositäten hatten als die dem Stand der Technik entsprechenden Addukte von Isophorondiisocyanat mit Trimethylolpropan.

| | NfA | Pendelhärte 130°C | Erichsen Tiefe 130°C |
|---|---|---|---|
| Vergleichsbeispiel 1 | 40,4 | 143 | 7,7 |
| Beispiel 1 | 45,7 | 147 | 8,1 |
| Beispiel 2 ^{*)} | 42,7 | 147 | 9,0 |
| Beispiel 5 ^{*)} | 48,0 | 146 | 8,6 |
| Beispiel 6 ^{*)} | 48,6 | 143 | 9,0 |

| | | | |
|---|---|---|---|
| *⁾ nicht-anspruchsgemäßes Beispiel | | | |

## Patentansprüche

1. Urethangruppenhaltige Polyisocyanate der Formel (I)
R^{a}-(-Y-[-Xᵢ]ₙ-(CO)-NH-R^{b}-NCO)ₖ
worin
R^{a} einen k-wertigen Rest, bevorzugt einen organischen Rest,
k eine positive ganze Zahl von 3 bis 6,
Y für ein Sauerstoff- oder Stickstoffatom,
Xᵢ -CH₂-CH₂-O-,
n für jedes k unabhängig voneinander 0 oder eine positive ganze Zahl bedeutet, mit der Maßgabe, daß in der Verbindung der Formel (I) mindestens drei und nicht mehr als sechzehn Gruppen Xₗ enthalten sind, und
R^{b} für jedes k unabhängig voneinander einen Rest 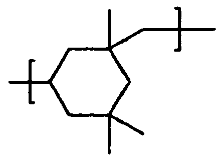 oder 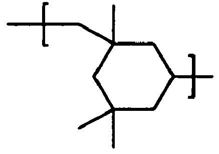 bedeutet, und worin
entweder der zugrundeliegende Alkohol R^{a}-(-Y-H)ₖ, worin Y ein Sauerstoffatom darstellt, ausgewählt ist aus der Gruppe bestehend aus Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit und Dulcit (Galactit),
oder der zugrundeliegende Alkohol R^{a}-(-Y-[-Xᵢ]ₙ-H)ₖ, worin Y ein Stickstoffatom darstellt, 1,3,5,Tris-(2-hydroxyethyl)cyanursäure ist.

2. Urethangruppenhaltige Polyisocyanate gemäß Anspruch 1, **dadurch gekennzeichnet, daß** k einen Wert von 3 bis 4 einnimmt.

3. Urethangruppenhaltige Polyisocyanate gemäß einem der vorstehenden Ansprüche, **dadurch gekennzeichnet, daß** der NCO-Gehalt (berechnet als NCO mit eine Molgewicht von 42 g/mol) mehr als 5 Gew% und bis zu 15 Gew% beträgt.

4. Zweikomponentige Polyurethanlacke, enthaltend urethangruppenhaltige Polyisocyanate gemäß einem der vorstehenden Ansprüche, gegebenenfalls weitere Polyisocyanate und mindestens eine Komponente, die gegenüber Isocyanat reaktive Gruppen enthält.

5. Verwendung von urethangruppenhaltigen Polyisocyanaten gemäß einem der Ansprüche 1 bis 3 in Klarlacken.

6. Verwendung von urethangruppenhaltigen Polyisocyanaten gemäß einem der Ansprüche 1 bis 3 in Beschichtungsmassen für Fahrzeuge, Flugzeuge, in Automobillacken als OEM und refinish-Anwendung.

## Claims

1. A urethane-group-containing Polyisocyanate of the formula (I)
R^{a}-(-Y-[-Xᵢ]ₙ-(CO)-NH-R^{b}-NCO)ₖ
in which
R⁴ is a k-valent radical, preferably an organic radical,
k is a positive integer from 3 to 6,
Y is an oxygen or a nitrogen atom,
Xᵢ is -CH₂-CH₂-O-,
n for each k independently of one another is 0 or a positive integer, with the proviso that in the compound of the formula (I) there are at least three and not more than sixteen groups Xᵢ, and
R^{b} for each k independently of one another is a
radical 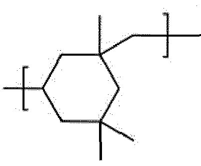 or 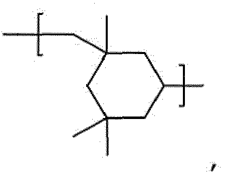 and in which
either the parent alcohol R^{a}-(-Y-H)ₖ, in which Y is an oxygen atom, is selected from the group consisting of trimethylolbutane, trimethylolpropane, trimethylolethane,
pentaerythritol, glycerol, ditrimethylolpropane, dipentaerythritol, sorbitol, mannitol, diglycerol, threitol, erythritol, adonitol (ribitol), arabitol (lyxitol), xylitol, and dulcitol (galactitol),
or the parent alcohol R^{a}-(-Y-[-Xᵢ]ₙ-H)ₖ, in which Y is a nitrogen atom, is 1,3,5-tris(2-hydroxyethyl)cyanuric acid.

2. The urethane-group-containing polyisocyanate of claim 1, wherein k takes up a value of 3 to 4.

3. The urethane-group-containing polyisocyanate of either of the preceding claims, wherein the NCO content (calculated as NCO with a molar weight of 42 g/mol) is more than 5% by weight and up to 15% by weight.

4. A two-component polyurethane coating material comprising urethane-group-containing polyisocyanates of any of the preceding claims, further polyisocyanates optionally, and at least one component which comprises isocyanate-reactive groups.

5. The use of a urethane-group-containing polyisocyanate of any of claims 1 to 3 in clearcoat materials.

6. The use of a urethane-group-containing polyisocyanate of any of claims 1 to 3 in coating compositions for vehicles, aircraft, and in automobile finishes as OEM and refinish.

## Revendications

1. Polyisocyanates contenant des groupes uréthane, de formule (I)
R^{a}-(-Y-[-Xᵢ]ₙ-(CO)-NH-R^{b}-NCO)ₖ
dans laquelle
R^{a} représente un radical k-valent, de préférence un radical organique,
k représente un nombre entier positif valant de 3 à 6,
Y représente un atome d'oxygène ou d'azote,
Xᵢ représente -CH₂-CH₂-O-,
n, pour chaque k chaque fois indépendamment, représente 0 ou un nombre entier positif, étant entendu que dans le composé de formule (I) au moins trois et au maximum seize groupes Xᵢ sont contenus, et
R^{b}, pour chaque k chaque fois indépendamment, représente un
radical 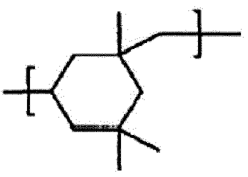 ou 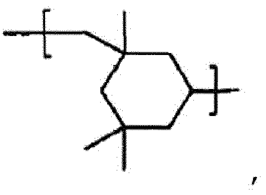 et dans lesquels soit l'alcool de base R^{a}-(-Y-H)ₖ, dans laquelle Y représente un atome d'oxygène, est choisi dans le groupe constitué par le triméthylolbutane, le triméthylolpropane, le triméthyloléthane, le pentaérythritol, le glycérol, le ditriméthylolpropane, le dipentaérythritol, le sorbitol, le mannitol, le diglycérol, le thréitol, l'érythritol, l'adonitol (ribitol), l'arabitol (lyxitol), le xylitol et le dulcitol (galactitol),
soit l'alcool de base R^{a}-(-Y-[-Xᵢ]ₙ-H)ₖ, dans lequel Y représente un atome d'azote, est l'acide 1,3,5,tris-(2-hydroxyéthyl)cyanurique.

2. Polyisocyanates contenant des groupes uréthanne selon la revendication 1, **caractérisé en ce que** k a une valeur de 3 à 4.

3. Polyisocyanates contenant des groupes uréthane selon l'une quelconque des revendications précédentes, **caractérisés en ce que** la teneur en NCO (calculée en tant que NCO ayant une masse moléculaire de 42 g/mole) vaut plus de 5 % en poids et jusqu'à 15 % en poids.

4. Peintures polyuréthane bicomposants, contenant des polyisocyanates contenant des groupes uréthane selon l'une quelconque des revendications précédentes, éventuellement d'autres polyisocyanates et au moins un composant qui contient des groupes réactifs vis-à-vis d'un isocyanate.

5. Utilisation de polyisocyanates contenant des groupes uréthane selon l'une quelconque des revendications 1 à 3, dans des vernis.

6. Utilisation de polyisocyanates contenant des groupes uréthane selon l'une quelconque des revendications 1 à 3, dans des matières de revêtement pour véhicules, aéronefs, dans des peintures pour automobiles en tant qu'OEM et l'utilisation en retouche.
